# EUROPEAN PATENT SPECIFICATION

(11) **EP 2 687 705 B1**
(45) Date of publication and mention of the grant of the patent: **25.12.2019**
(21) Application number: 12761178.8
(22) Date of filing: 06.03.2012
(51) Int. Cl.: F02D 29/02, B60W 10/02, B60W 10/04, B60W 10/06, F02D 11/10, F02D 17/00, F02D 29/00, F02D 45/00, F02D 41/06, F02D 41/02, F02D 41/10, B60W 30/18, F02N 11/08, F02N 11/10

(54) **ENGINE CONTROL APPARATUS, AND ENGINE CONTROL METHOD**
MOTORSTEUERUNGSVORRICHTUNG UND MOTORSTEUERUNGSVERFAHREN
APPAREIL DE COMMANDE DE MOTEUR ET PROCÉDÉ DE COMMANDE DE MOTEUR

(30) Priority: 18.03.2011 JP 2011060099
(43) Date of publication of application: 22.01.2014
(73) Proprietor: Honda Motor Co., Ltd., Minato-ku Tokyo 107-8556 (JP)
(72) Inventor: TAKANO Yuki, Wako-shi Saitama 351-0193 (JP); IKEDA Kenichiro, Wako-shi Saitama 351-0193 (JP); KUNIKIYO Katsuhiro, Wako-shi Saitama 351-0193 (JP); KATO Yuichi, Wako-shi Saitama 351-0193 (JP); MITSUKAWA Makoto, Wako-shi Saitama 351-0193 (JP); KUBO Kentaro, Wako-shi Saitama 351-0193 (JP); IKARASHI Kazunori, Wako-shi Saitama 351-0193 (JP); KONO Naoki, Wako-shi Saitama 351-0193 (JP); TAKEWAKA Tomoyuki, Wako-shi Saitama 351-0193 (JP)
(74) Representative: Quinterno, Giuseppe
(86) International application number: PCT/JP2012/055612
(87) International publication number: WO 2012/128021

(56) References cited:
- EP-A2- 1 348 895
- WO-A1-2009/002002
- JP-A- 2002 364 403
- JP-A- 2003 120 357
- JP-A- 2004 044 567
- JP-A- 2006 077 605
- JP-A- 2006 144 718
- JP-A- 2006 152 965
- US-A1- 2010 305 838

## Description

The present invention relates to an engine control apparatus for controlling an engine to start after the engine has stopped idling.

### Background Art

Japanese Patent No. 3555555 discloses that in or-der to prevent a sudden large acceleration from acting on an idling-stopped vehicle and hence from causing the driver to have a sudden acceleration feel when the vehicle starts to move, an increasing drive force is applied to the vehicle until the vehicle starts to move when the engine starts after it has stopped idling, and the drive force is temporarily reduced in an ultra-low vehicle speed range immediately after the vehicle has started to move. It has heretofore been known in the art to delay the drive force with respect to an accelerator command when the engine starts after it has stopped idling.

As disclosed in Japanese Laid-Open Patent Publication No. 2001-159321, it is also known to control the drive force by electronically controlling a throttle valve opening (DBW).

US 2010/305838 A1 discloses an engine torque reduction control effected after an automatic engine start of a vehicle with an automatic transmission. A torque limitation is switched on or off in accordance with a gear selector position, a road surface friction, a road slope and an intensity of a driver request reflecting the driver's intention as to how they desire to start the vehicle. Selection of a D-range of the automatic transmission contributes to a potential immediate reduction control cancellation.

### Summary of Invention

However, even when the driver opens the throttle valve to start to move the vehicle and tries to accelerate the vehicle quickly, such an acceleration intended by the driver is suppressed according to the technologies disclosed in Japanese Patent No. 3555555 and Japanese Laid-Open Patent Publication No. 2001-159321.

It is an object of the present invention to pro-vide an engine control apparatus for allowing a vehicle to start to move smoothly when the engine of the vehicle is restarted after the engine has stopped idling in view of a situation wherein the driver is ready to start to move the vehicle, notwithstanding the presence of a controller for suppressing the drive force when the engine is restarted after the engine has stopped idling.

In order to achieve the above object, there is provided in accordance with appended claim 1, an engine control apparatus for suppressing drive power of an engine on a vehicle based on a driver's instruction to open a throttle when the vehicle is started after the engine has restarted from a stop-idling state, comprising a transmission, having a plurality of gear positions with different speed reduction ratios, for transmitting drive power of the engine to a drive wheel of the vehicle based on one of the gear positions that is currently selected, ready-to-start determining means for determining whether the driver is ready to start the vehicle or not, and propulsive output control means for suppressing drive power of the engine based on the driver's instruction to open the throttle when the vehicle is started after the engine has restarted, and cancelling the suppression of the drive power of the engine if the ready-to-start determining means determines that the driver is ready to start the vehicle, and wherein the ready-to-start determining means determines that the driver is ready to start the vehicle if a first predetermined time has elapsed while the vehicle is not started after the engine has restarted, in a state where the gear positions of the transmission are not selected.

According to an aspect recited in claim 2, the engine control apparatus further comprises a centrifugal clutch for transmitting drive power of the engine to the transmission, wherein the gear positions are divided into two gear position groups including a gear position group having larger speed reduction ratios and a gear position group having smaller speed reduction ratios, and wherein the ready-to-start determining means determines that the driver is ready to start the vehicle if a first predetermined time has elapsed while the vehicle is not started after the engine has restarted, in a case where the gear positions of the transmission are not selected, or in a case where one of the gear positions in the gear position group having smaller speed reduction ratios is selected.

According to an aspect recited in claim 3, the ready-to-start determining means determines that the driver is ready to start the vehicle if a second predetermined time has elapsed before the rotational speed of the engine reaches an engaging rotational speed of the centrifugal clutch after the engine has restarted, in a case where one of the gear positions in the gear position group having greater speed reduction ratios is selected, and the first predetermined time and the second predetermined time are related to each other as follows: the first predetermined time < the second predetermined time.

According to an aspect recited in claim 4, it is determined that the driver is ready to start the vehicle if a third predetermined time has elapsed after the engine has restarted while the vehicle is not started, even when the rotational speed of the engine reaches the engaging rotational speed of the centrifugal clutch without the elapse of the second predetermined time after the engine has restarted, and the first predetermined time, the second predetermined time, and the third predetermined time are related to each other as follows: the first predetermined time < the second predetermined time < the third predetermined time.

According to an aspect recited in claim 5, the engine is controlled to stop idling again after a fourth predetermined time has elapsed while the engine is idling after the engine has restarted, and the first predetermined time, the second predetermined time, and the fourth predetermined time are related to each other as follows: the first predetermined time < the second predetermined time < the fourth predetermined time.

According to an aspect recited in claim 6, the engine control apparatus further comprises instruction means for indicating that the driver is ready to start the vehicle, wherein the ready-to-start determining means determines that the driver is ready to start the vehicle if the instruction means indicates that the driver is ready to start the vehicle.

According to an aspect recited in claim 7, the instruction means comprises a switch for indicating that the driver is ready to start the vehicle.

According to an aspect recited in claim 8, the instruction means for indicating that the driver is ready to start the vehicle comprises a sensor for detecting that a gear change is made after the engine has started.

According to the present invention, when the vehicle is started after the engine has restarted from a stop-idling state, drive power of the engine is normally suppressed immediately after the vehicle is started. If it is determined that the driver is ready to start the vehicle, the suppression of the drive power of the engine immediately after the vehicle is started is canceled. Therefore, the vehicle can be started and accelerated smoothly based on the driver's intention to accelerate the vehicle.

According to appended in claim 1, if the first predetermined time has elapsed while the vehicle is not started after the engine has restarted in a state where the gear positions of the transmission are not selected (i.e., the transmission is in a neutral position), then it is deter-mined that the driver is ready to start the vehicle, and the suppression of the drive power of the engine immediately after the vehicle is started is canceled.

Therefore, after the driver has recognized that the engine has restarted by the vibrations and sound of the engine, the driver can make preparations for starting the vehicle, such as a gear change. The vehicle can subsequently be started and accelerated smoothly based on the driver's intention to accelerate the vehicle.

According to the aspect recited in claim 2, the engine control apparatus includes the centrifugal clutch for transmitting drive power of the engine to the transmission. The gear positions are divided into two gear position groups including a gear position group having larger speed reduction ratios and a gear position group having smaller speed reduction ratios, and the ready-to-start determining means determines that the driver is ready to start the vehicle if a first predetermined time has elapsed while the vehicle is not started after the engine has restarted, in a case where the gear positions of the transmission are not selected (the transmission is in a neutral position), or in a case where one of the gear positions (high gear positions) in the gear position group having smaller speed reduction ratios is selected, and the suppression of the drive power of the engine immediately after the vehicle has started is canceled. Therefore, after the driver has recognized that the engine has restarted from the vibrations and sound of the engine, the driver can make preparations for starting the vehicle, such as a gear change to a low gear position. The vehicle can be started and accelerated smoothly based on the driver's intention to accelerate the vehicle. In some cases, the vehicle is started while the transmission is in a high gear position. In this case, since the speed reduction ratio of the high gear position is small, the vehicle is accelerated relatively moderately immediately after it has been started. Thereafter, the driver makes a gear change to a low gear position for smoothly accelerating the vehicle. Thus, even if the vehicle is started while the transmission is in a high gear position, the driver is determined as ready to start the vehicle, and the output suppression control process is canceled. The vehicle can thus be started and accelerated smoothly based on the driver's intention to accelerate the vehicle.

According to the aspect recited in claim 3, the ready-to-start determining means determines that the driver is ready to start the vehicle if the second predetermined time has elapsed before the rotational speed of the engine reaches an engaging rotational speed of the centrifugal clutch after the engine has restarted, in a case where one of the gear positions (low gear positions) in the gear position group having greater speed reduction ratios is selected, and the suppression of the drive power of the engine immediately after the vehicle has been started is canceled. Even if any one of the low gear positions is selected, the driver recognizes that the engine has restarted from the vibrations and sound thereof before the vehicle is started, and thereafter the vehicle can be started and accelerated smoothly based on the driver's intention to accelerate the vehicle.

According to the aspect recited in claim 4, it is determined that the driver is ready to start the vehicle if the third predetermined time has elapsed after the engine has restarted when the vehicle is not started, even when the rotational speed of the engine reaches the engaging rotational speed of the centrifugal clutch without the elapse of the second predetermined time after the engine has restarted. For example, in a case where the driver is braking the vehicle and increasing the engine rotational speed, thereby ready to start the vehicle, or the driver is increasing the engine rotational speed, thereby ready to start the vehicle at a rest on an uphill road, with the transmission in a low gear position, the vehicle can be started and accelerated smoothly based on the driver's intention to accelerate the vehicle.

According to the aspect recited in claim 5, the engine is controlled to stop idling again after the fourth predetermined time has elapsed in a state where the engine is idling after the engine has restarted, and the first predetermined time, the second predetermined time, and the fourth predetermined time are related to each other as follows: the first predetermined time < the second predetermined time < the fourth predetermined time. The process of determining whether the driver is ready to start the vehicle is completed before the time of stopping idling again, so that the vehicle can be accelerated smoothly.

According to the aspect recited in claim 6, the engine control apparatus includes instruction means for indicating that the driver is ready to start the vehicle, wherein the ready-to-start determining means determines that the driver is ready to start the vehicle if the instruction means indicates that the driver is ready to start the vehicle. Since the suppression of the drive power of the engine is canceled based on a clear instruction from the driver that the driver is ready to start the vehicle, the vehicle can be accelerated smoothly based on the driver's intention to accelerate the vehicle.

According to the aspect recited in claim 7, the instruction means for indicating that the driver is ready to start the vehicle comprises the switch. Therefore, an instruction that the driver is ready to start the vehicle is given by a clear and simple action, and the suppression of the drive power of the engine is canceled based on such an instruction. Thus, the intention of the driver is reflected clearly and quickly, and then the vehicle can be accelerated smoothly based on the intention of the driver to accelerate the vehicle.

According to the aspect recited in claim 8, the instruction means for indicating that the driver is ready to start the vehicle comprises the sensor for detecting that a gear change is made after the engine has been started. Therefore, an instruction that the driver is ready to start the vehicle is given by an operation (gear change) in preparation for starting the vehicle, and the suppression of the drive power of the engine is canceled based on such an instruction. Thus, the driver's intention is reflected clearly, and then the vehicle can be accelerated smoothly based on the intention of the driver to accelerate the vehicle.

The above and other objects, features, and advantages of the present invention will become more apparent from the description of a preferred embodiment below, taken in conjunction with the accompanying drawings.

### Brief Description of Drawings

FIG. 1 is a schematic block diagram of an engine control apparatus incorporated in a throttle-by-wire (TBW) motorcycle according to an embodiment of the present invention;
FIG. 2 is a cross-sectional view of a power unit, taken along a crankshaft, and a main shaft and a countershaft of a transmission;
FIG. 3 is a cross-sectional view of the power unit, taken along the countershaft, a shift drum, and a transmission clutch;
FIG. 4 is a flowchart of an operation sequence of an idling stop control process;
FIG. 5 is a flowchart of an operation sequence of an engine restart control process;
FIG. 6 is a flowchart of a process of determining whether the driver has an intention to start the motorcycle or not;
FIG. 7 is a flowchart of the process of determining whether the driver has an intention to start the motorcycle or not;
FIG. 8 is a flowchart of an operation sequence of an engine output suppression control process;
FIG. 9 is a graph showing the opening of a throttle valve at the time the engine output suppression control process is carried out;
FIG. 10 is a side elevational view of a motorcycle incorporating the engine control apparatus according to the embodiment; and
FIG. 11 is an enlarged fragmentary view of handlebars shown in FIG. 10.

### Description of Embodiments

An engine control method and an engine control apparatus for carrying out the engine control method according to a preferred embodiment of the present invention will be described in detail below with reference to the accompanying drawings.

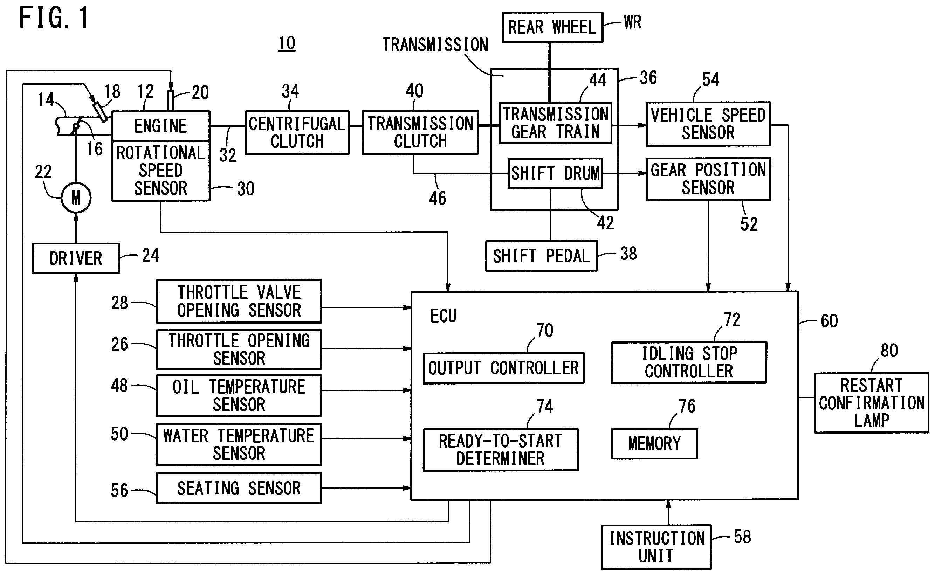

FIG. 1 shows in schematic block form an engine control apparatus 10 incorporated in a throttle-by-wire motorcycle. The engine control apparatus 10 includes an engine 12, a throttle valve 16 mounted in an intake pipe 14, an injector (fuel injection device) 18 for injecting fuel in order to produce an air-fuel mixture to be introduced into a combustion chamber, not shown, in the engine 12, and an ignition plug (ignition device) 20 for igniting the air-fuel mixture in the combustion chamber. The air-fuel mixture is a mixture of air and fuel.

The injector 18 injects fuel into air that is introduced through the throttle valve 16 which adjusts an amount of air introduced into the combustion chamber, thereby producing an air-fuel mixture. The produced air-fuel mixture flows into the combustion chamber in the engine 12, and is then ignited by the ignition plug 20 and combusted in the combustion chamber. The engine 12 thus converts the energy of combustion into power.

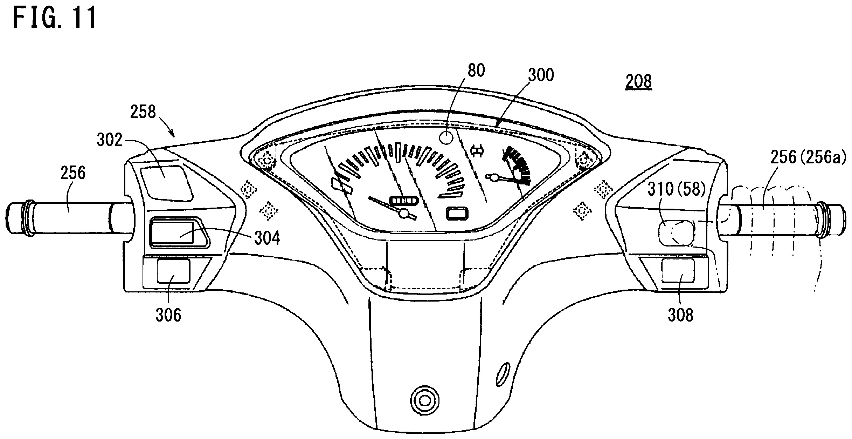

A motor 22 for adjusting the opening of the throttle valve 16 is energized by a driver 24. The throttle valve 16 is opened based on the opening of a throttle grip 256a (see FIG. 11) on the handlebars of the motorcycle. The opening of the throttle grip 256a is detected by a throttle opening sensor 26. A throttle valve opening sensor 28 detects the opening of the throttle valve 16. A rotational speed sensor 30 detects a rotational speed of the engine 12 (hereinafter referred to as "engine rotational speed").

The engine control apparatus 10 also includes a centrifugal clutch 34 which is coupled to an end of a crankshaft 32 serving as the output shaft of the engine 12 and engaged if the rotational speed of the crankshaft 32 (engine rotational speed) exceeds an engaging rotational speed, a transmission 36 which receives drive power of the crankshaft 32 (drive power of the engine 12) when the centrifugal clutch 34 is engaged and transmits the received drive power at a changed transmission ratio (speed reduction ratio) to a rear wheel (drive wheel) WR, and a transmission clutch 40 which is interposed between the centrifugal clutch 34 and the transmission 36, and engageable when the motorcycle is being normally driven and disengageable to cut off the drive power transmitted from the crankshaft 32 to the transmission 36 when the transmission 36 is making a gear change with a shift pedal 38.

An operating force that the driver applies to the shift pedal 38 is converted into a force tending to turn a shift drum 42 in the transmission 36 through a certain angle. As the shift drum 42 is turned, one of a plurality of gear positions provided by a transmission gear train 44 is selected. The gear positions, which have different speed reduction ratios, include a first speed gear position, a second speed gear position, a third speed gear position, and a fourth speed gear position, for example. The first speed gear position has the greatest speed reduction ratio, and the fourth speed gear position has the smallest speed reduction ratio. A transmission mechanism 46 for transmitting a turning motion to the transmission clutch 40 is connected to the shift drum 42. The transmission clutch 40 is disengaged by an operating force that is applied to the shift pedal 38. When the engine rotational speed exceeds the engaging rotational speed of the centrifugal clutch 34, the drive power from the crankshaft 32 is transmitted through the transmission gear train 44 to the rear wheel WR, propelling the motorcycle. When the shift pedal 38 is operated to make a gear change, the transmission clutch 40 ganged with the shift drum 42 is disengaged to allow the gear change to be made smoothly without the need for a manual clutch operation.

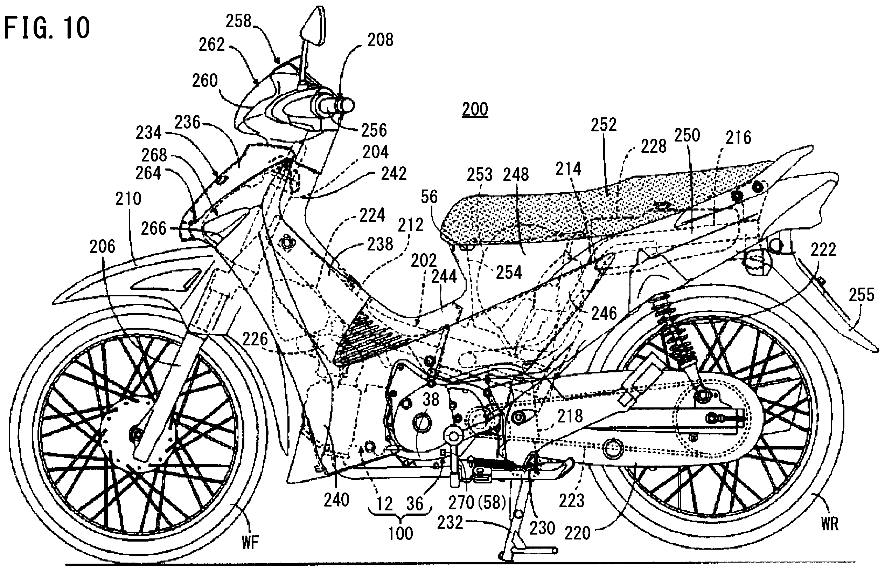

The engine control apparatus 10 includes an oil temperature sensor 48 for detecting the temperature of a lubricant oil in the engine 12 and the transmission 36, a water temperature sensor 50 for detecting the temperature of a coolant water in the engine 12, a gear position sensor 52 for detecting a gear position that is currently selected based on the rotational angle of the shift drum 42, a vehicle speed sensor 54 for detecting a vehicle speed from the rotational speed of a predetermined gear of the transmission gear train 44, and a pressure-sensitive or switch-operated seating sensor 56 for detecting whether the driver is seated on a rider's seat 252 (see FIG. 10) of the motorcycle or not. A instruction unit (instruction means) 58 is a switch for indicating that the driver is ready to start the motorcycle, and outputs an operation signal based on an operation of the driver to an ECU 60.

The engine control apparatus 10 includes the ECU (Engine Control Unit) 60, which has an output controller 70, an idling stop controller 72, a ready-to-start determiner 74, and a memory 76. The ECU 60 comprises a computer, which functions as the ECU 60 by reading programs recorded in the memory 76 or a recording medium, not shown. The ECU 60 also functions as a counter for measuring time.

The output controller (output control means) 70 controls the engine 12 to enable the motorcycle to travel based on the amount of operation of the throttle operated by the driver. Specifically, the output controller 70 controls the injector 18, the ignition plug 20, and the driver 24 based on the amount of operation (the opening of the throttle grip 256a) of the throttle grip 256a operated by the driver. More specifically, based on the amount of operation of the throttle grip 256a, the output controller 70 controls the driver 24 to adjust the opening of the throttle valve 16 and to control the amount and timing of fuel injected by the injector 18, and the timing of ignition by the ignition plug 20. The engine thus has a rotational speed based on the amount of operation of the throttle grip 256a operated by the driver. When the amount of operation of the throttle grip 256a is substantially nil (i.e., when the opening of the throttle grip 256a is substantially zero degrees), the output controller 70 controls the engine 12 to bring its engine rotational speed to an idling rotational speed.

If the engine 12 is restarted after it has stopped idling under the control of the idling stop controller 72 described below, then the output controller 70 performs a control process (output suppression control process) for suppressing the drive power of the engine 12 when the engine 12 starts. However, if the ready-to-start determiner (ready-to-start determining means) 74, which determines whether the driver is ready to start the motorcycle or not, determines that the driver is ready to start the motorcycle, then the output controller 70 cancels the control process for suppressing the drive power of the engine 12 when the engine 12 starts even when the engine 12 is restarted after it has stopped idling.

The idling stop controller (idling stop control means) 72 stops idling the engine 12 if given stop conditions are satisfied. More specifically, the idling stop controller stops idling the engine 12 if the given stop conditions are satisfied and the motorcycle stops while the engine 12 is idling, i.e., if the vehicle speed of the motorcycle is substantially nil while the engine 12 is idling, and thereafter it stops the idling until the driver indicates its intention to start the engine 12, e.g., an instruction to open the throttle grip 256a, for thereby reducing carbon dioxide (CO₂) emission from the motorcycle and fuel consumption by the motorcycle.

The memory 76 has a memory area for recording ON and OFF of flags, and memory areas for storing an idling stop flag, a ready-to-start determination (output suppression canceling determination) flag, a neutral/high-gear standby flag, and an engine restart flag to be described later.

The ECU 60 controls the energization of a restart confirmation lamp 80. The restart confirmation lamp 80 is able to emit red, yellow, and blue lights. When the engine 12 stops, the ECU 60 controls the restart confirmation lamp to blink in red. After the engine 12 has been restarted, the ECU 60 controls the restart confirmation lamp to be energized in yellow. When the output suppression control process is canceled, i.e., when the ready-to-start determiner 74 determines that the driver is ready to start the motorcycle, the ECU 60 controls the restart confirmation lamp to be energized in blue. The driver can accelerate the motorcycle smoothly based on its intention after having visually confirmed the restart confirmation lamp 80. When the vehicle speed reaches a predetermined speed, e.g., 5 km/h, after the motorcycle has started, the ECU 60 de-energizes the restart confirmation lamp 80.

Detected signals from the throttle opening sensor 26, the throttle valve opening sensor 28, the rotational speed sensor 30, the oil temperature sensor 48, the water temperature sensor 50, the gear position sensor 52, the vehicle speed sensor 54, and the seating sensor 56 are sent to the ECU 60. The throttle opening sensor 26, the throttle valve opening sensor 28, the rotational speed sensor 30, the oil temperature sensor 48, the water temperature sensor 50, the gear position sensor 52, the vehicle speed sensor 54, and the seating sensor 56 make their measurements at given periodic intervals.

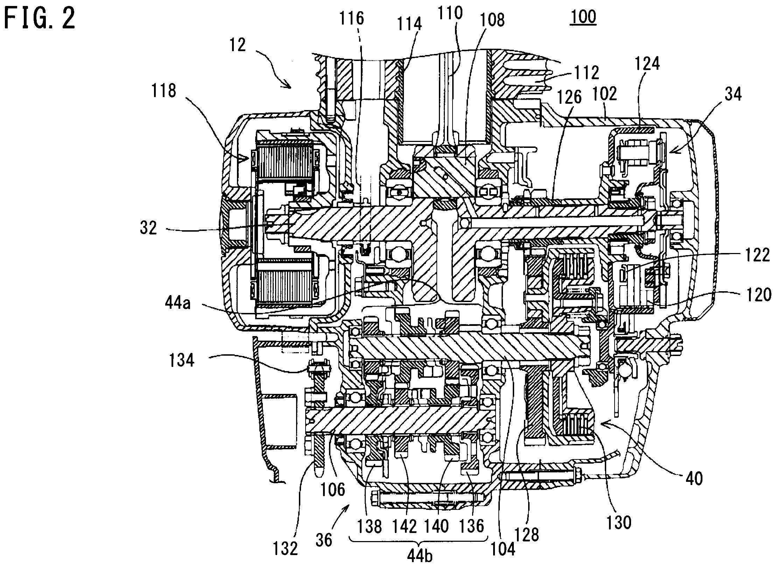

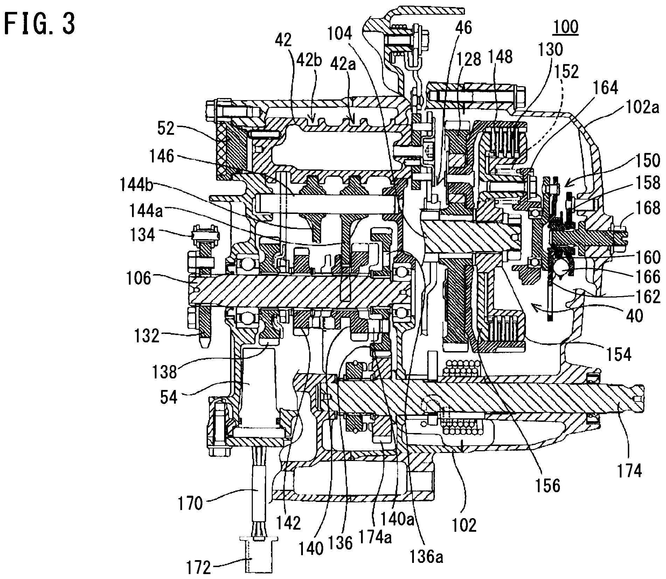

FIGS. 2 and 3 are cross-sectional views of a power unit 100 of the motorcycle. The power unit 100 is of a known structure with the transmission 36 being housed in a crankcase 102 of the engine 12, the transmission 36 transmitting the rotational drive power generated by the engine 12 at a speed reduction ratio based on the selected gear position. FIG. 2 is a cross-sectional view of the power unit 100, taken along the crankshaft 32, and a main shaft 104 and a countershaft 106 of the transmission 36. FIG. 3 is a cross-sectional view of the power unit 100, taken along the countershaft 106, the shift drum 42, and the transmission clutch 40.

The crankshaft 32 is rotatably supported substantially centrally in the crankcase 102. A connecting rod 110 has a larger end rotatably supported on the crankshaft 32 by a crankpin 108. The connecting rod 110 has an upper smaller end connected to a piston, not shown, which is movable back and forth in a sleeve 114 disposed in a cylinder 112. The piston moves back and forth under the pressure produced by the combustion of the air-fuel mixture, whereby the crankshaft 32 rotates about its own axis. An endless chain 116 is trained around the crankshaft 32 for transmitting rotational drive power to a camshaft which actuates intake and exhaust valves, not shown. A starter motor 118 for starting the engine 12 is coupled to a left end, as shown, of the crankshaft 32.

The centrifugal clutch 34 which is engaged when the rotational speed of the crankshaft 32 exceeds a predetermined value is coupled to a right end, as shown, of the crankshaft 32. The centrifugal clutch 34 has a clutch shoe 120 which is spaced from a clutch outer member 124 under the tensile force of a spring 122 when the engine 12 is idling. As the rotational speed of the crankshaft 32 increases, an increased centrifugal force acts on the clutch shoe 120, spreading the clutch shoe 120 radially outwardly against the tensile force of the spring 122. When the rotational speed of the crankshaft 32 exceeds the predetermined value, the clutch shoe 120 is pressed into frictional engagement with an inner circumferential surface of the clutch outer member 124 and transmits its rotational drive power to an output gear 126 that is connected to the clutch outer member 124.

The output gear 126 is held in mesh with an input gear 128 that is mounted on the main shaft 104 of the transmission 36 through the transmission clutch 40 which has a plurality of clutch plates 130. Since the transmission clutch 40 is engaged except when the transmission 36 makes a gear change, the rotational drive power applied to the input gear 128 is transmitted directly to the main shaft 104 when the motorcycle is being normally driven. Operation of the transmission clutch 40 at the time the transmission 36 makes a gear change will be described later.

The transmission gear train 44 includes a main gear train 44a mounted on the main shaft 104 and a counter gear train 44b mounted on the countershaft 106. The rotational drive power transmitted to the main shaft 104 is transmitted from the main gear train 44a to the countershaft 106 through the counter gear train 44b that is held in mesh with the main gear train 44a. The countershaft 106 then rotates the rear wheel WR through a drive chain 134 that is trained around a drive sprocket 132 mounted on a left end, as shown, of the countershaft 106. According to the present embodiment, the transmission 36 has four forward gear positions, and the counter gear train 44b has a first speed gear position 136, a second speed gear position 138, a third speed gear position 140, and a fourth speed gear position 142.

A transmission mechanism will be described below with reference to FIG. 3. When the driver swings the shift pedal 38, which is of a see-saw shape, in one direction or the other direction in order to select one of a neutral position and the first through fourth speed gear positions 136, 138, 140, 142, the shift drum 42, which is of a hollow cylindrical structure, is turned about its own axis in one direction or the other direction through a predetermined angle. The shift drum 42 has guide grooves 42a, 42b defined in its outer surface, and shift forks 144a, 144b have respective ends engaging in the guide grooves 42a, 42b. The shift forks 144a, 144b are axially swingably mounted on a shift shaft 146 fixed to an inner wall surface of the crankcase 102. When the shift drum 42 is turned about its own axis, the shift forks 144a, 144b swingably move to the left or right in FIG. 3 according to the shapes of the guide grooves 42a, 42b.

Gear changes are made between the gear positions by selectively engaging and disengaging dog clutches, typically made up of an engagement recess (dowel hole) 136a defined in the first speed gear position 136 and an engagement protrusion (dowel) 140a disposed in the third speed gear position 140. The other ends of the shift forks 144a, 144b engage the counter gear train 44b and the main gear train 44a (see FIG. 2), respectively, for axially swinging respective gears thereof to selectively engage and disengage the dog clutches. Based on the shapes of the guide grooves 42a, 42b of the shift drum 42, the transmission 36 has sequential gear shifting patterns for shifting up the gears from the neutral (N) position to the first speed gear position to the second speed gear position to the third speed gear position to the fourth speed gear position and shifting down the gears in the reverse order.

The transmission clutch 40 includes a clutch outer member 148 nonrotatably fixed to the input gear 128 on the main shaft 104, a presser plate 154 normally biased to the left in FIG. 3 by a biasing member 152 away from a clutch adjusting mechanism 150 that is attached to a crankcase cover 102a of the crankcase 102, and a clutch inner member 156 supporting the clutch plates 130. When the motorcycle is being normally driven, the transmission clutch 40 is engaged with the clutch plates 130 held in frictional engagement with each other under the biasing force of the biasing member 152. The transmission clutch 40 also includes a clutch lifter plate 158, a retainer 160, a clutch lifter cam 162, and a clutch center plate 164 that are assembled in the order named from the crankcase cover 102a along an axial extension from the main shaft 104. When the shift pedal 38 is operated by the driver, the clutch lifter cam 162 is turned by a link mechanism, not shown, causing a land of the clutch lifter cam 162 to ride onto a ball 166 of a retainer 160 that is positioned on the clutch lifter plate 158, thereby pressing the clutch center plate 164 to disengage the transmission clutch 40. The clutch adjusting mechanism 150 has an adjustment nut 168 with which the relationship between the amount of operation of the shift pedal 38 and the degree to which to disengage the transmission clutch 40 can be adjusted from the outside of the crankcase cover 102a.

The gear position sensor 52 is attached to a left end, as shown, of the shift drum 42 for detecting a presently selected gear position based on the rotation angle of the shift drum 42. The vehicle speed sensor 54 is disposed in a lower left region, as shown, of the crankcase 102. An electric signal from the vehicle speed sensor 54 is sent through a cable 170 and a connector 172 to the ECU 60. The first speed gear position 136 of the counter gear train 44b has its gear held in mesh with an input gear 174a on a starter shaft 174 that is coupled to a kick pedal, not shown. Thus, a kick starter for rotating the crankshaft 32 under a pressing force that is applied to the kick pedal is formed.

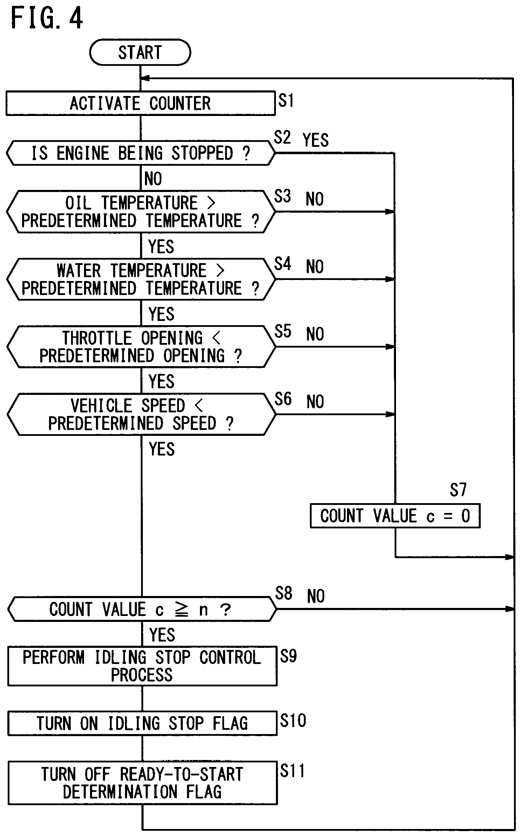

Operation of the engine control apparatus 10 will be described below with reference to flowcharts shown in FIGS. 4 through 8. First, an idling stop control process to stop idling will be described below with reference to the flowchart shown in FIG. 4.

The idling stop controller 72 activates a counter (step S1) and judges whether the engine 12 is being stopped or not while a power supply, not shown, of the motorcycle is turned on, i.e., its main switch is turned on (step S2). The idling stop controller 72 judges whether the engine 12 is being stopped or not, based on the engine rotational speed detected by the rotational speed sensor 30. The counter increments a count value c at constant time intervals. Therefore, the period of time that has elapsed from the activation of the counter can be known from the count value c.

If the idling stop controller 72 judges that the engine 12 is not being stopped in step S2, then the idling stop controller 72 judges whether the latest oil temperature detected by the oil temperature sensor 48 is higher than a predetermined temperature or not (step S3).

If the idling stop controller 72 judges that the detected oil temperature is higher than the predetermined temperature in step S3, then the idling stop controller 72 judges whether the latest water temperature detected by the water temperature sensor 50 is higher than a predetermined temperature or not (step S4).

Steps 3 and 4 serve to judge whether or not the oil temperature and the water temperature have risen to temperatures for making it possible for the engine 12 to operate stably after the engine 12 has started in a low ambient temperature environment, for example.

If the idling stop controller 72 judges that the detected water temperature is higher than the predetermined temperature in step S4, then the idling stop controller 72 judges whether or not the latest opening detected by the throttle opening sensor 26 is smaller than a predetermined opening or not (step S5). The predetermined opening may be set to 1 degree, for example, for judging whether the driver has an intention of stopping or not.

If the idling stop controller 72 judges that the detected opening of the throttle grip 256a is smaller than the predetermined opening in step S5, then the idling stop controller 72 judges whether the latest vehicle speed detected by the vehicle speed sensor 54 is lower than a predetermined speed or not (step S6). The predetermined speed may be set to 1 km/h, for example, for judging whether the motorcycle has substantially stopped or not.

If the idling stop controller 72 judges that the engine 12 is being stopped in step S2, or that the oil temperature is not higher than the predetermined temperature in step S3, or that the water temperature is not higher than the predetermined temperature in step S4, or that the opening of the throttle grip 256a is not smaller than the predetermined opening in step S5, or that the vehicle speed is not lower than the predetermined speed in step S6, then the idling stop controller 72 resets the count value c, i.e., sets the count value c to c = 0 (step S7). Thereafter, control goes back to step S1, i.e., the idling stop controller 72 does not control the engine 12 to stop idling.

If the idling stop controller 72 judges that the detected vehicle speed is lower than the predetermined speed in step S6, then the idling stop controller 72 judges whether or not the present count value c is equal to or greater than n (predetermined value) (step S8). If the idling stop controller 72 judges that the present count value c is not equal to or greater than n, then control goes back to step S1, i.e., the idling stop controller 72 does not control the engine 12 to stop idling. Step S8 serves to judge whether all the stop conditions for controlling the engine 12 to stop idling are satisfied for a predetermined period S or not (i.e., whether or not the count value c is equal to or greater than n).

If the idling stop controller 72 judges that the count value c is equal to or greater than n in step S8, then the idling stop controller 72 performs an idling stop control process (step S9). The idling stop control process makes the engine 12 stop idling and come to a halt.

Then, the idling stop controller 72 turns an idling stop flag on (step S10). More specifically, the idling stop controller 72 stores "1" in the memory area of the memory 76 for storing ON and OFF of the idling stop flag. In this case, when the idling stop flag is ON, the idling stop controller 72 stores "1" in the memory area, and when the idling stop flag is OFF, the idling stop controller 72 stores "0" in the memory area. ON of the idling stop flag means that the idling stop control process is performed to make the engine 12 come to a halt.

Then, the idling stop controller 72 turns off a ready-to-start determination (output suppression canceling) flag (step S11), after which control goes back to step S1. More specifically, the idling stop controller 72 stores "0" in the memory area of the memory 76 for storing ON and OFF of the ready-to-start determination flag. In this case, when the ready-to-start determination flag is ON, the idling stop controller 72 stores "1" in the memory area, and when the ready-to-start determination flag is OFF, the idling stop controller 72 stores "0" in the memory area. If the ready-to-start determination flag has already been OFF, control skips step S11. ON of the ready-to-start determination flag means that the driver is ready to start to move the motorcycle.

As described above, if all the stop conditions (all idling stop conditions) indicating that the engine 12 is not being stopped, the oil temperature is lower than the predetermined temperature, the water temperature is lower than the predetermined temperature, the opening of the throttle grip 256a is smaller than the predetermined opening, and the vehicle speed is lower than the predetermined speed, are satisfied for the predetermined period S (fourth predetermined period, e.g., 3 seconds), then the engine 12 is controlled to stop idling in step S9. Consequently, the engine 12 is appropriately able to stop idling.

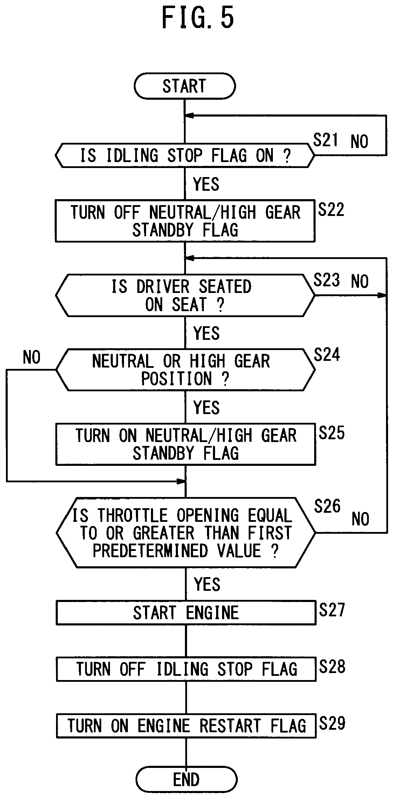

An engine restart control process for restarting the engine 12 will be described below with reference to the flowchart shown in FIG. 5. The output controller 70 judges whether the idling stop flag is ON or not (step S21). In other words, the output controller 70 judges whether or not "1" is stored in the memory area of the memory 76 for storing ON and OFF of the idling stop flag.

If the output controller 70 judges that the idling stop flag is not ON in step S21, control stays in step S21 until the idling stop flag is judged as ON.

If the output controller 70 judges that the idling stop flag is ON in step S21, then the output controller 70 turns off a neutral/high-gear standby flag (step S22). More specifically, the output controller 70 stores "0" in the memory area of the memory 76 for storing ON and OFF of the neutral/high-gear standby flag. ON of the neutral/high-gear standby flag means that when the engine 12 is started, the transmission 36 is in the neutral position or in a high gear position (third or fourth gear position). If the neutral/high-gear standby flag has already been OFF, then control skips step S22 and goes to a next step.

Then, the output controller 70 judges whether the driver is seated on the rider's seat 252 of the motorcycle or not (step S23) based on a detected signal sent from the seating sensor 56.

If the output controller 70 judges that the driver is not seated on the rider's seat 252 in step S23, then control stays in step S23 until the driver is seated on the rider's seat 252. If the output controller 70 judges that the driver is seated on the rider's seat 252 in step S23, then the output controller 70 judges whether or not the transmission 36 is now in the neutral position or the high gear position (step S24) based on a detected signal sent from the gear position sensor 52. Specifically, the gear positions of the transmission 36 are divided into two gear position groups, i.e., a gear position group having larger speed reduction ratios and a gear position group having smaller speed reduction ratios. The gear position group having smaller speed reduction ratios is referred to as a high gear position, and the gear position group having larger speed reduction ratios as a low gear position. According to the present embodiment, when the first speed gear position 136 or the second speed gear position 138 is selected, the transmission 36 is in the low gear position, and when the third speed gear position 140 or the fourth speed gear position 142 is selected, the transmission 36 is in the high gear position.

If the output controller 70 judges that the transmission 36 is currently in the neutral position or the high gear position in step S24, then the output controller 70 turns on the neutral/high-gear standby flag (step S25), after which control goes to step S26. In other words, the output controller 70 stores "1" in the memory area of the memory 76 for storing ON and OFF of the neutral/high-gear standby flag. If the output controller 70 judges that the transmission 36 is not in the neutral position or the high gear position in step S24, then control goes from step S24 to step S26.

In step S26, the output controller 70 judges whether or not the opening of the throttle grip 256a is equal to or greater than a first predetermined value (e.g., 3 degrees). If the output controller 70 judges that the opening of the throttle grip 256a is not equal to or greater than the first predetermined value in step S26, then control goes back to step S23. The output controller 70 judges whether or not the opening of the throttle grip 256a is equal to or greater than the first predetermined value based on a detected signal detected by the throttle opening sensor 26.

If the output controller 70 judges that the opening of the throttle grip 256a is equal to or greater than the first predetermined value in step S26, then the output controller 70 starts the engine 12 (step S27). As the engine 12 is started, the output controller 70 controls the opening of the throttle valve 16, the injection amount and injection timing by the injector 18, and the timing of ignition of fuel by the ignition plug 20, based on the opening of the throttle grip 256a. When the opening of the throttle grip 256a is of substantially 0 degrees (i.e., when the throttle grip 256a is not operated) after the engine 12 has been started, the output controller 70 controls the opening of the throttle valve 16, the injection amount and injection timing by the injector 18, and the timing of ignition by the ignition plug 20 in order to bring the engine rotational speed to an idling rotational speed.

Then, the output controller 70 turns off the idling stop flag (step S28). In other words, the output controller 70 stores "0" in the memory area of the memory 76 for storing ON and OFF of the idling stop flag.

Thereafter, the output controller 70 turns on an engine restart flag (step S29). More specifically, the output controller 70 stores "1" in the memory area of the memory 76 for storing ON and OFF of the engine restart flag. ON of the engine restart flag means that the engine 12 is now restarted.

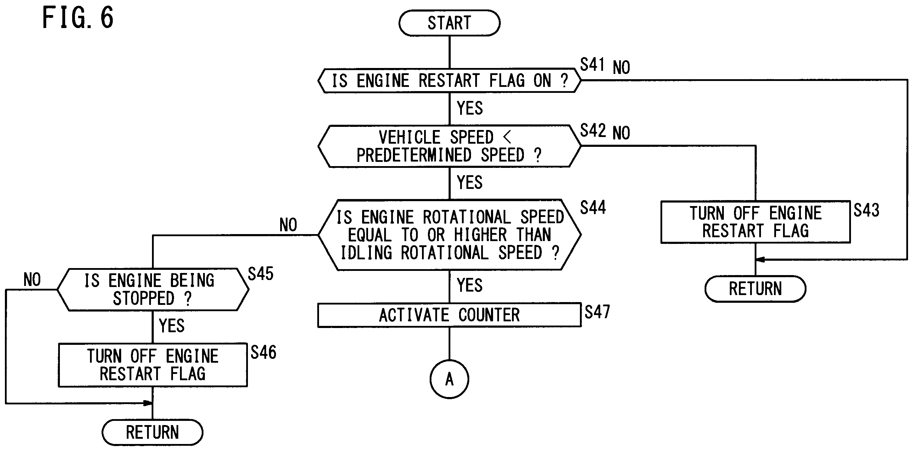

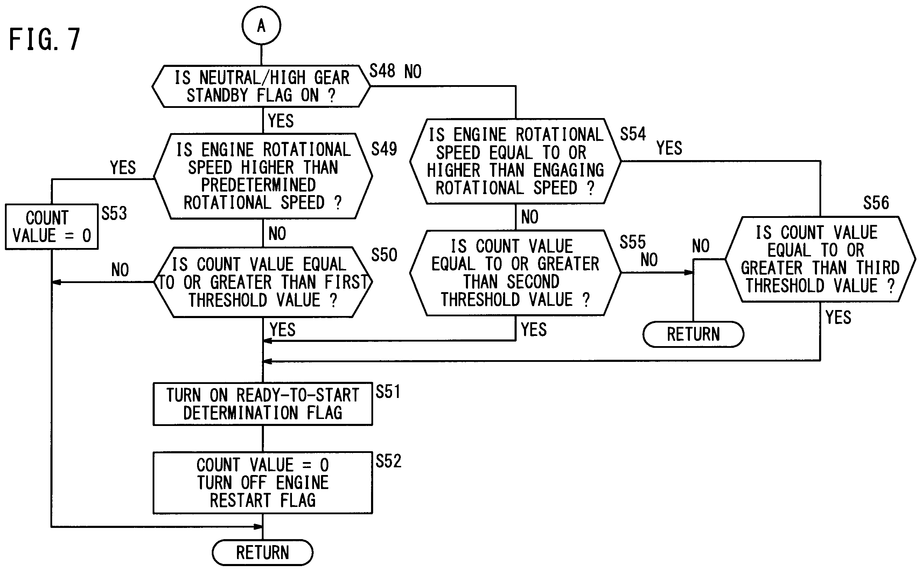

A process of determining whether the driver is ready to start the motorcycle or not will be described below with reference to the flowcharts shown in FIGS. 6 and 7. The process shown in FIGS. 6 and 7 is carried out as an interrupt process in other processes at certain periodic intervals.

The ready-to-start determiner 74 determines whether the engine restart flag is now ON or not (step S41). Specifically, the ready-to-start determiner 74 confirms whether "1" is stored in the memory area of the memory 76 for storing ON and OFF of the engine restart flag or not, thereby judging whether the engine is started or not.

If the ready-to-start determiner 74 judges that the engine restart flag is not ON in step S41, then control waits until the timing of a next interrupt process comes. When the timing of a next interrupt process comes, the process shown in the flowcharts shown in FIGS. 5 and 6 is carried out from step S41. If the ready-to-start determiner 74 judges that the engine restart flag is ON in step S41, then the ready-to-start determiner 74 judges whether the latest vehicle speed detected by the vehicle speed sensor 54 is lower than a predetermined speed (e.g., 1 km/h) or not (step S42). Step S42 serves to judge whether the motorcycle is being stopped or equal to being stopped.

If the ready-to-start determiner 74 judges that the detected vehicle speed is not lower than the predetermined speed in step S42, then the ready-to-start determiner 74 turns off the engine restart flag (step S43), after which control stays in step S41. More specifically, the ready-to-start determiner 74 stores "0" in the memory area of the memory 76 for storing ON and OFF of the engine restart flag. If the ready-to-start determiner 74 judges that the detected vehicle speed is equal to or higher than the predetermined speed, then the ready-to-start determiner 74 regards the motorcycle as having already started, and does not determine whether the driver is ready to start the motorcycle or not. When control goes back to step S41, control waits until the timing of a next interrupt process comes. When the timing of a next interrupt process comes, the process shown in the flowcharts shown in FIGS. 5 and 6 is carried out from step S41.

If the ready-to-start determiner 74 judges that the detected vehicle speed is lower than the predetermined speed in step S42, then the ready-to-start determiner 74 judges whether or not the latest engine rotational speed detected by the rotational speed sensor 30 is equal to or higher than an idling rotational speed (step S44). If the driver does not operate the throttle grip 256a (i.e., if the opening of the throttle grip 256a is of 0 degrees), **t**hen after the engine 12 has restarted, the engine rotational speed gradually approaches the idling rotational speed, and is subsequently maintained at the idling rotational speed.

If the ready-to-start determiner 74 judges that the engine rotational speed is not equal to or higher than the **i**dling rotational speed in step S44, then the ready-to-start determiner 74 judges whether the engine 12 is being stopped or not (step S45). If the ready-to-start determiner 74 judges that the engine 12 is not being stopped, then control goes back step S41. If the ready-to-start determiner 74 judges that the engine 12 is being stopped in step S45, then the ready-to-start determiner 74 turns off the engine restart flag (step S46), after which control goes back to step S41.

If the ready-to-start determiner 74 judges that the engine rotational speed is equal to or higher than the idling rotational speed in step S44, then the ready-to-start determiner 74 activates the counter (step S47), and then control goes to step S48 shown in FIG. 7. The counter increments the count value c at constant time intervals. Therefore, the period of time that has elapsed from the activation of the counter can be known from the count value c. When the engine 12 is started in step S27 in FIG. 5, the counter is immediately activated in step S47 in FIG. 6. Therefore, the count value c of the counter can be regarded as measuring the time that has elapsed after the restart of the engine 12. If the counter has already been activated, then control skips step S47 and goes to a next step.

In step S48 shown in FIG. 7, the ready-to-start determiner 74 judges whether the neutral/high-gear standby flag is ON or not. More specifically, the ready-to-start determiner 74 judges whether "1" is stored in the memory area of the memory 76 for storing ON and OFF of the neutral/high-gear standby flag or not.

If the ready-to-start determiner 74 judges that the neutral/high-gear standby flag is ON in step S48, then the ready-to-start determiner 74 judges whether or not the latest engine rotational speed detected by the rotational speed sensor 30 is equal to or higher than a predetermined rotational speed (step S49). The predetermined rotational speed is higher than the idling rotational speed (e.g., it is set to the idling rotational speed + 500 rpm), so that the throttle grip 256a can be judged as being operated by the driver.

If the ready-to-start determiner 74 judges that the engine rotational speed detected by the rotational speed sensor 30 is not higher than the predetermined rotational speed (i.e., that the engine rotational speed is equal to or lower than the predetermined rotational speed) in step S49, then the ready-to-start determiner 74 judges whether or not the count value c is equal to or greater than a first threshold value (step S50). The first threshold value is set to a value for judging whether or not a first predetermined time (e.g., 1.0 second) has elapsed with the throttle grip 256a being not operated after the counter has been activated (i.e., after the engine 12 has restarted) or after the count value c has been reset in step S53 and thereafter the counter has been activated again in step S47. The first threshold value is smaller than n (predetermined value) used in the judgment of step S8 shown in FIG. 4. Consequently, the process of determining whether the driver is ready to start the motorcycle is completed in a period of time shorter than it is judged whether the idling stop control process is carried out again after the engine 12 has started.

If the ready-to-start determiner 74 judges that the count value c is not equal to or greater than the first threshold value in step S50, then control goes back to step S41 in FIG. 6. If the ready-to-start determiner 74 judges that the count value c is equal to or greater than the first threshold value in step S50, then the ready-to-start determiner 74 turns on the ready-to-start determination flag (step S51). The ready-to-start determiner 74 sets the count value to 0, i.e., resets the count value c, and turns off the engine restart flag (step S52).

If the count value becomes equal to or higher than the first threshold value (i.e., if the first predetermined time elapses) before the engine rotational speed becomes higher than the predetermined rotational speed while the transmission 36 is in the neutral position or in the high gear position, then the ready-to-start determiner 74 regards the driver as having recognized that the engine 12 has started from the vibrations and sound of the engine 12, and determines that the driver is ready to start the motorcycle, and does not perform the output suppression control process, i.e., cancels the output suppression control process, when the motorcycle is started.

Therefore, if the first predetermined time elapses before the engine rotational speed becomes higher than the predetermined rotational speed while the transmission 36 is in the neutral position or in the high gear position, after the counter has been activated (i.e., after the engine 12 has restarted) or after the count value c has been reset in step S53 and thereafter the counter has been activated again in step S47, then the driver is determined as ready to start the motorcycle. If the transmission 36 is in the neutral position, then the motorcycle does not start unless the driver makes a gear change. If the transmission 36 is in the high gear position, then since the speed reduction ratio is small and the motorcycle accelerates relatively slowly immediately after it has started, the first predetermined time may be a minimum time (e.g., 1.0 second) during which the driver can recognize the starting of the engine 12.

If the ready-to-start determiner 74 judges that the detected engine rotational speed is higher than the predetermined rotational speed in step S49, then the ready-to-start determiner 74 sets the count value c to 0, i.e., resets the count value c, (step S53), after which control goes back to step S41 in FIG. 6. If the detected engine rotational speed becomes higher than the predetermined rotational speed before the count value c reaches the first threshold value, then in view of the possibility that the driver may have turned the throttle grip 256a more than necessary, the ready-to-start determiner 74 does not determine that the driver is ready to start the motorcycle, and continues the output suppression control process upon the starting of the motorcycle.

If the ready-to-start determiner 74 judges that the neutral/high-gear standby flag is not ON in step S48, then the ready-to-start determiner 74 judges whether or not the latest engine rotational speed detected by the rotational speed sensor 30 is equal to or higher than an engaging rotational speed for engaging the centrifugal clutch 34 (step S54).

If the ready-to-start determiner 74 judges that the engine rotational speed is not equal to or higher than the engaging rotational speed in step S54, then the ready-to-start determiner 74 judges whether or not the count value c is equal to or greater than a second threshold value (step S55). The second threshold value is set to a value for judging whether or not a second predetermined time (e.g., 1.5 seconds) has elapsed with the throttle grip 256a being not operated after the counter has been activated (i.e., after the engine 12 has restarted) or after the count value c has been reset in step S53 and thereafter the counter has been activated again in step S47. The second threshold value is greater than the first threshold value, and is smaller than n (predetermined value) used in the judgment of step S8 shown in FIG. 4.

If the ready-to-start determiner 74 judges that the count value c is not equal to or greater than the second threshold value in step S55, then control goes back to step S41 in FIG. 6. If the ready-to-start determiner 74 judges that the count value c is equal to or greater than the second threshold value in step S55, then control goes to step S51 in which the ready-to-start determiner 74 turns on the ready-to-start determination flag. Thereafter, in step S52, the ready-to-start determiner 74 sets the count value c to 0 and turns off the engine restart flag.

If the count value c becomes equal to or greater than the second threshold value (i.e., if the second predetermined time elapses) before the engine rotational speed reaches the engaging rotational speed, then the ready-to-start determiner 74 determines that the driver is starting the motorcycle, having recognized that the engine 12 has started by the vibrations and sound of the engine 12, i.e., determines that the driver is ready to start the motorcycle, and turns on the ready-to-start determination flag.

If the ready-to-start determiner 74 judges that the engine rotational speed is equal to or higher than the engaging rotational speed in step S54, then the ready-to-start determiner 74 judges whether or not the count value c is equal to or greater than a third threshold value (step S56). The third threshold value is greater than the first and second threshold values, and is smaller than n (predetermined value) used in step S8 shown in FIG. 4. Step S54 thus serves to judge whether or not a third predetermined time (e.g., 2 seconds) have elapsed after the engine 12 has started, or after the count value c has been reset in step S53 and thereafter the counter has been activated again in step S47 while the engine rotational speed is equal to or higher than the engaging rotational speed.

If the ready-to-start determiner 74 judges that the count value c is not equal to or greater than the third threshold value in step S56, then control goes back to step S41 in FIG. 6. If the ready-to-start determiner 74 judges that the count value c is equal to or greater than the third threshold value in step S56, then control goes to step S51 in which the ready-to-start determiner 74 turns on the ready-to-start determination flag. Thereafter, in step S52, the ready-to-start determiner 74 sets the count value c to 0 and turns off the engine restart flag.

There are situations wherein with the transmission 36 in the low gear position, the driver is braking the motorcycle and increasing the engine rotational speed, thereby ready to start the motorcycle, or the driver is increasing the engine rotational speed, thereby ready to start the motorcycle on an uphill road. In such situations, if the third predetermined time elapses after the counter has been activated (i.e., after the engine 12 has restarted) or after the count value c has been reset in step S53 and thereafter the counter has been activated again in step S47 while the engine rotational speed is equal to or higher than the engaging rotational speed, then the driver is able to recognize that the engine 12 has started by the vibrations and sound of the engine 12. In this case, the driver is regarded as ready to start the motorcycle. Then, the ready-to-start determination flag is turned on, and the output suppression control process is canceled. Therefore, the motorcycle can smoothly start or run uphill based on the intention of the driver.

The ready-to-start determiner 74 may turn on the ready-to-start determination flag when it receives an instruction from the instruction unit 58 indicating that the driver is ready to start the motorcycle.

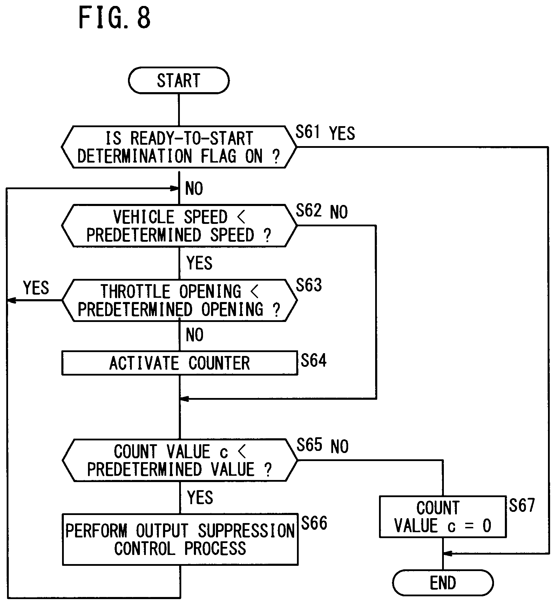

An output suppression control process for suppressing the output power of the engine 12 will be described below with reference to the flowchart shown in FIG. 8. The output controller 70 controls the engine 12 to output drive power based on an operation of the driver to open the throttle grip 256a. More specifically, the output controller 70 controls the engine rotational speed by controlling the opening of the throttle valve 16, the injection amount and injection timing of the injector 18, and the timing of ignition of the ignition plug 20. If the throttle grip 256a is not being operated by the driver, then the output controller 70 controls the engine 12 to bring its engine rotational speed to the idling rotational speed.

The output controller 70 judges whether the ready-to-start determination flag is ON or not (step S61). More specifically, if "1" is stored in the ready-to-start determination flag memory area of the memory 76, then the output controller 70 judges that the ready-to-start determination flag is ON, and if "0" is stored in the ready-to-start determination flag memory area of the memory 76, then the output controller 70 judges that the ready-to-start determination flag is OFF.

If the output controller 70 judges that the ready-to-start determination flag is not ON in step S61, then the output controller 70 judges whether the latest vehicle speed detected by the vehicle speed sensor 54 is lower than a predetermined speed (e.g., 1 km/h) or not (step S62). Step S62 serves to judge whether or not the motorcycle is being stopped or equal to being stopped.

If the output controller 70 judges that the detected vehicle speed is not lower than the predetermined speed in step S62, then control jumps to step S65. If the output controller 70 judges that the detected vehicle speed is lower than the predetermined speed in step S62, then the output controller 70 judges whether the latest opening of the throttle grip 256a detected by the throttle opening sensor 26 is smaller than a predetermined opening (e.g., one degree) or not (step S63). Step S63 serves to judge whether the throttle grip 256a is being operated by the driver or not.

If the output controller 70 judges that the detected opening is smaller than the predetermined opening in step S63, control goes back to step S62. If the output controller 70 judges that the detected opening is not smaller than the predetermined opening (i.e., that the detected opening is equal to or greater than the predetermined opening) in step S63, then the output controller 70 activates the counter (step S64), after which control goes to step S65. The counter increments the count value c at constant time intervals. If the counter has already been activated, the output controller 70 resets the count value c (i.e., sets the count value c to c = 0).

In step S65, the output controller 70 judges whether the count value c is smaller than a predetermined value or not. More specifically, in step S65, the output controller 70 judges whether or not a predetermined time (e.g., 3 seconds) has elapsed after the throttle grip 256a has been operated while the vehicle speed being substantially zero.

If the output controller 70 judges that the count value c is smaller than the predetermined value (i.e., that the predetermined time has not elapsed after the throttle grip 256a was operated while the vehicle speed is substantially 0) in step S65, then the output controller 70 performs the output suppression control process (step S66), after which control goes back to step S62. In other words, the output controller 70 suppresses the drive power of the engine 12. Normally, the output controller 70 controls the drive power of the engine 12 based on the present opening of the throttle grip 256a. However, when the motorcycle starts after the engine 12 having stopped idling has restarted, the output controller 70 controls the engine 12 to output a drive power smaller than the drive power of the engine 12 produced based on the opening of the throttle grip 256a.

More specifically, when the motorcycle starts after the engine 12 having stopped idling has restarted, the output controller 70 suppresses the drive power of the engine 12 by controlling the throttle valve 16 to produce an opening smaller than the opening produced based on the opening of the throttle grip 256a.

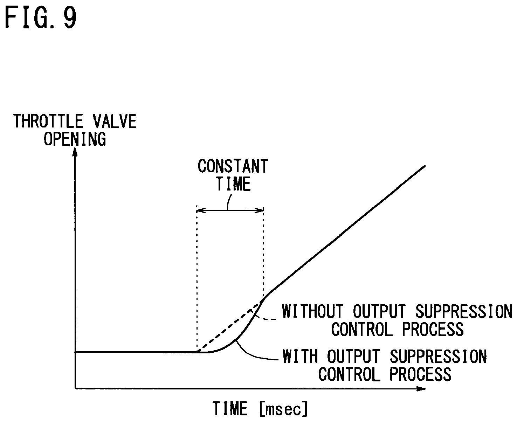

FIG. 9 is a graph showing the opening of the throttle valve 16 at the time the output suppression control process is carried out by the output controller 70. In FIG. 9, the dotted-line curve represents the opening of the throttle valve 16 as it changes with time when the output suppression control process is not carried out, and the solid-line curve represents the opening of the throttle valve 16 as it changes with time when the output suppression control process is carried out. It is assumed in FIG. 9 that the driver operates the throttle grip 256a so as to increase the opening of the throttle grip 256a with time.

When the throttle grip 256a is operated, the opening of the throttle valve 16 gradually increases. When the output suppression control process is carried out, the throttle valve 16 is controlled to make the opening thereof smaller than when the output suppression control process is not carried out.

The output suppression control process changes a suppressed quantity (suppression quantity) as time passes (i.e., gradually increases the suppression quantity and then gradually reduces the suppression quantity), and is ended upon elapse of a predetermined time (e.g., 3 seconds). Consequently, when the driver is not ready to start the motorcycle (or when the driver does not recognize that the engine 12 has started), if the throttle grip 256a is operated, then the acceleration of the motorcycle at the time it has started is appropriately suppressed.

If the output controller 70 judges that the count value c is not smaller than the predetermined value (i.e., that the count value c is equal to or greater than the predetermined value) in step S65, then control goes to step S67 in which the output controller 70 sets the count value c to 0 (i.e., resets the count value c), after which the processing sequence is ended. In other words, if the count value c is the same as the predetermined value (e.g., 3 seconds or longer as a sufficient time), the output controller 70 judges that a sufficient time has already elapsed, and does not perform the output suppression control process.

If the output controller 70 judges that the ready-to-start determination flag is ON in step S61, then the processing sequence is ended. Since the output suppression control process is not carried out (i.e., the output suppression control process is canceled) if the ready-to-start determination flag is ON, the motorcycle can smoothly start and accelerate or start to run uphill based on the intention of the driver even when the motorcycle is to start after the engine 12 has restarted.

If the instruction unit 58 is operated while the output suppression control process is being carried out, then the output controller 70 may immediately cancel the output suppression control process.

As described above, basically, the drive power of the engine 12 is suppressed when the motorcycle is started after the engine 12 having stopped idling has restarted, and if the driver is determined as ready to start, then the drive power of the engine 12 is not suppressed when the motorcycle is started after the engine 12 having stopped idling has restarted. Consequently, the motorcycle is able to start smoothly based on the driver's intention to accelerate the motorcycle.

After the engine 12 has restarted, if the first predetermined time elapses while the engine rotational speed is equal to or lower than the predetermined rotational speed with the transmission 36 in the neutral position or the high gear position (e.g., the third speed gear position or the fourth speed gear position in a case of a four-speed-gear vehicle), then the driver can recognize that the engine 12 has restarted by the vibrations and sound of the engine 12 and can be regarded as ready to start the motorcycle. Therefore, if the first predetermined time elapses while the engine rotational speed is equal to or lower than the predetermined rotational speed with the transmission 36 in the neutral position or the high gear position, the driver is determined as ready to start the motorcycle, and the motorcycle can be started smoothly based on the driver's intention to accelerate the motorcycle. If the transmission 36 is in the neutral position, then the motorcycle does not start unless the driver makes a gear change. If the transmission 36 is in the high gear position, then since the speed reduction ratio is small and the motorcycle accelerates relatively slowly immediately after it has started, the first predetermined time may be set to a minimum time (e.g., 1 second) during which the driver can recognize the starting of the engine.

When the engine rotational speed reaches the engaging **r**otational speed of the centrifugal clutch 34 with the transmission 36 in the low gear position (e.g., the first speed gear position or the second speed gear position in a case of a four-speed-gear vehicle), then since the centrifugal clutch 34 is engaged, the motorcycle starts to move. If the second predetermined time has elapsed before the engine rotational speed reaches the engaging rotational speed, then since the driver can recognize that the engine 12 has restarted by the vibrations and sound of the engine 12, the driver can be regarded as ready to start the motorcycle. In this case, therefore, the driver is determined as ready to start the motorcycle, and the motorcycle can be started smoothly based on the driver's intention to accelerate the motorcycle.

While the driver is braking the motorcycle and increasing the engine rotational speed, thereby ready to start the motorcycle, or the driver is increasing the engine rotational speed, thereby ready to start the motorcycle on an uphill road, if the transmission 36 is in the low gear position, the engine rotational speed is equal to or higher than the engaging rotational speed, and the third predetermined time has elapsed, then inasmuch as the driver is able to recognize that the engine 12 has started by the vibrations and sound thereof and can be regarded as ready to start the motorcycle. In this case, as the driver is determined as ready to start the motorcycle, the motorcycle can smoothly start based on the driver's intention to accelerate the motorcycle.

FIG. 10 is a side elevational view of a motorcycle 200 incorporating the engine control apparatus 10 according to the present embodiment. The motorcycle 200 has a body frame 202 including a head pipe 204 on its front end. A front fork 206 on which a front wheel WF is rotatably supported is steerably supported by the head pipe 204. The front fork 206 has an upper end to which bar-shaped handlebars 208 are coupled. The front wheel WF has an upper portion covered with a front fender 210 supported on the front fork 206.

The body frame 202 includes the head pipe 204 on its front end, a main pipe 212 extending rearwardly and downwardly from the head pipe 204, a pair of left and right rear pipes 214 fixed to the rear end of the main pipe 212 and extending rearwardly and upwardly therefrom, a pair of seat rails 216 integrally joined to the respective rear ends of the rear pipes 214 and extending substantially horizontally, and a pair of left and right support frames 218 extending downwardly from the rear end of the main pipe 212. A rear fork 220 on which a rear wheel WR is rotatably supported is pivotally supported on the support frames 218. A rear cushion 222 is connected between a rear portion of the body frame 202 and the rear fork 220.

The power unit 100 including the engine 12 and the transmission 36 is mounted on an intermediate portion of the body frame 202 at a position below the main pipe 212. Output power of the transmission 36 is transmitted through a chain 223 to the rear wheel WR.

An air cleaner 224 and a carburetor 226 disposed between the air cleaner 224 and the engine 12 are disposed above the engine 12. A fuel tank 228 that is disposed above the rear wheel WR is supported on the rear portion of the body frame 202. A stand 232 is angularly movably mounted by a stand shaft 230 on lower portions of the support frames 218 of the body frame 202.

The body frame 202 is covered with a body cover 234 including a front cover 236 which covers the head pipe 204 from the front, a pair of left and right main pipe side covers 238 joined to both sides of the front cover 236 so as to cover the main pipe 212, a portion of the engine 12, the air cleaner 224, and the carburetor 226 from the sides, a pair of left and right leg shields 240 detachably mounted on the main pipe side covers 238 so as to cover front portions of the main pipe side covers 238 from the sides, a main pipe upper cover 242 joining upper portions of the main pipe side covers 238 so as to cover the head pipe 204 from the rear and also to cover a front portion of the main pipe 212 from the above, a central cover 244 joined to the main pipe side covers 238 and a rear portion of the main pipe upper cover 242 so as to cover an intermediate portion of the main pipe 212 from the above, a pair of left and right side covers 246 joined to rear portions of the main pipe side covers 238 so as to cover a rear portion of the main pipe 212 and the rear pipes 214 from the sides, a front body cover 248, whose horizontal cross section has a substantially U-shape that opens rearwardly, extending upwardly from a rear portion of the central cover 244 and upper portions of the pair of side covers 246, and a pair of left and right rear body covers 250 joined to rear portions of the side covers 246 and a rear portion of the front body cover 248 so as to cover the seat rails 216 from the sides.

A tandem rider's seat 252 is mounted on the front body cover 248 and the rear body covers 250. The tandem rider's seat 252 has a front end openably and closably pivoted on the front body cover 248. Below the tandem rider's seat 252 which is closed, there are disposed a storage compartment 254 for storing a helmet 253 therein with the tandem rider's seat 252 being used as an openable and closable lid for the storage compartment 254, and the fuel tank 228 that can be supplied with fuel when the tandem rider's seat 252 is open. The pressure-sensitive or switch-operated seating **s**ensor 56 is disposed between the tandem rider's seat 252 and the storage compartment 254. A rear fender 255 which covers the rear wheel WR from above is joined to the rear body covers 250.

Grips 256 are mounted on the respective ends of the handlebars 208. The portions of the handlebars 208 except the grips 256 are covered with a handle cover 258 made of synthetic resin.

The handle cover 258 has a headlight opening 260 defined centrally in a front portion thereof. A headlight 262 is mounted on the handle cover 258 so as to face the headlight opening 260. The main pipe side covers 238 of the body cover 234 have protrusions 264 formed integrally on their ends which project laterally from the opposite side ends of the front cover 236. Front blinkers 268 are mounted on the protrusions 264 and face respective front blinker openings 266 that are defined in the protrusions 264**.**

The shift pedal 38 is connected to the transmission 36. The shift pedal 38 may have a sensor (instruction means) 270 for detecting that the shift pedal 38 is operated. If the sensor 270 detects that the shift pedal 38 is operated, then the ready-to-start determiner 74 may determine that the driver is ready to start the motorcycle. The sensor 270 may comprise a switch for outputting an ON signal when the shift pedal 38 is operated, or a load sensor for detecting that the shift pedal 38 is operated, or a contactless potentiometer.

FIG. 11 is an enlarged fragmentary view of the handlebars 208 shown in FIG. 10. As shown in FIG. 11, the portions of the handlebars 208 except the grips 256 on the opposite ends thereof are covered with the handle cover 258. The right-hand grip 256 serves as the throttle grip 256a. When the driver turns the throttle grip 256a, the output power of the engine 12 is controlled by the engine control apparatus 10 based on how much the throttle grip 256a is turned.

The handle cover 258 houses therein a meter unit 300 that is visible from outside. The meter unit 300 displays the vehicle speed detected by the vehicle speed sensor 54 and the remaining amount of fuel. The meter unit 300 includes the restart confirmation lamp 80. Based on the lighting state of the restart confirmation lamp 80, the driver can easily and quickly recognize the state of restarting of the engine 12.

The handle cover 258 has a dimmer switch 302, a directional indicator switch 304, a horn switch 306, and a start switch 308 which are externally operable. When the driver presses the start switch 308, the driver can energize the starter motor 118 to start the engine 12 without the aid of the idling stop control process for automatically restarting the engine 12. The handle cover 258 also has an output suppression cancel switch 310 as the externally operable instruction unit 58. The output suppression cancel switch 310 is located in a position accessible by the thumb of the right hand of the driver gripping the throttle grip 256a. Therefore, the driver can cancel the output suppression control process based on the driver's own action.

In the above embodiment, the present invention has been described with respect to the vehicle with the transmission combined with the centrifugal clutch 34. However, the present invention is also applicable to a vehicle with a normal manual transmission. In this case, the output suppression control process is carried out in principal, for example, when the vehicle is started after the engine has restarted in a case where idling is stopped by gripping a clutch lever while the transmission is in the low gear position. As is the case with the above embodiment, the output suppression control process may be canceled based on a period of time for which idling of the engine is maintained or a time until the clutch is engaged, or in response to an instruction issued when the driver operates a switch, a shift pedal, or the like.

In the above embodiment, the transmission 36 has the first through fourth speed gear positions. However, the transmission is not limited to the above, and the transmission may have first through sixth speed gear positions. In this case, low gear positions may be gear positions other than at least a gear position (first speed gear position) having the greatest speed reduction ratio and a gear position (second speed gear position) having the second greatest speed reduction ratio.

On a vehicle with a continuously variable transmission (CVT) such as a belt-type automatic transmission, where the output suppression control process is carried out when the vehicle is started after the engine has restarted from a state of stop-idling, the output suppression control process may be canceled by a determining means for determining that the driver is ready to start the vehicle when the second predetermined time has elapsed before the engaging rotational speed of the centrifugal clutch is reached or when the engaging rotational speed of the centrifugal clutch is reached before the second predetermined time elapses, and the third predetermined time has elapsed without the vehicle being started, or by a determining means in the form of the output suppression cancel switch 310. In this case, the restart confirmation lamp 80 may be provided for the driver to confirm that the output suppression control process is canceled.

The output suppression control process is not limited to the control of the opening of the throttle valve by throttle-by-wire (TBW), but may also be carried out by controlling the ignition timing, the amount of injected fuel, an intake throttle valve, an exhaust valve, etc. other than the throttle body, or a combination thereof.

The present invention has been described above with respect to the preferred embodiment thereof. However, the scope of the appended claims is not limited to the scope of the above embodiment. It is obvious to those skilled in the art that various modifications or improvements can be made with respect to the above embodiment. It is apparent that configurations based on such modifications or improvements fall within the scope of the appended claims. Reference characters in parentheses which are quoted in the appended claims are added in accordance with the reference characters shown in the accompanying drawings for an easier understanding of the claims, and said claims should not be construed as being limited to the elements denoted by those reference characters.

## Claims

1. An engine control apparatus (10) for suppressing drive power of an engine (12) on a vehicle based on a driver's instruction to open a throttle when the vehicle is started after the engine (12) has restarted from a stop-idling state, comprising:
a transmission (36), having a plurality of gear positions with different speed reduction ratios, for transmitting drive power of the engine (12) to a drive wheel (WR) of the vehicle based on one of the gear positions that is currently selected;
ready-to-start determining means (74) for determining whether the driver is ready to start the vehicle or not;
and
propulsive output control means (70) for suppressing drive power of the engine (12) based on the driver's instruction to open the throttle when the vehicle is started after the engine (12) has restarted, and canceling the suppression of the drive power of the engine (12) if the ready-to-start determining means (74) determines that the driver is ready to start the vehicle,
and
wherein the ready-to-start determining means (74) determines that the driver is ready to start the vehicle if a first predetermined time has elapsed while the vehicle is not started after the engine (12) has restarted, in a state where the gear positions of the transmission (36) are not selected.

2. An engine control apparatus (10) according to claim 1
wherein the engine control apparatus (10) further comprises a centrifugal clutch (34) for transmitting drive power of the engine (12) to the transmission (36);
wherein the gear positions are divided into two gear position groups including a gear position group having larger speed reduction and a gear position group having smaller speed reduction ratios; and
wherein the ready-to-start determining means (74) determines that the driver is ready to start the vehicle if a first predetermined time has elapsed while the vehicle is not started after the engine (12) has restarted, in a case where the gear positions of the transmission (36) are not selected, or in a case where one of the gear positions in the gear position group having smaller speed reduction ratios is selected.

3. The engine control apparatus (10) according to claim 2, wherein the ready-to-start determining means (74) determines that the driver is ready to start the vehicle if a second predetermined time has elapsed before the rotational speed of the engine (12) reaches an engaging rotational speed of the centrifugal clutch (34) after the engine (12) has restarted, in a case where one of the gear positions in the gear position group having greater speed reduction ratios is selected; and
the first predetermined time and the second predetermined time are related to each other as follows:
the first predetermined time < the second predetermined time.

4. The engine control apparatus (10) according to claim 3, wherein it is determined that the driver is ready to start the vehicle if a third
predetermined time has elapsed after the engine (12) has restarted while the vehicle is not started, even when the rotational speed of the engine (12) reaches the engaging rotational speed of the centrifugal clutch (34) without the elapse of the second predetermined time after the engine (12) has restarted; and
the first predetermined time, the second predetermined time, and the third predetermined time are related to each other as follows:
the first predetermined time < the second predetermined time < the third predetermined time.

5. The engine control apparatus (10) according to claim 3, wherein the engine (12) is controlled to stop idling again after a fourth predetermined time has elapsed while the engine (12) is idling after the engine (12) has restarted; and
the first predetermined time, the second predetermined time, and the fourth predetermined time are related to each other as follows:
the first predetermined time < the second predetermined time < the fourth predetermined time.

6. The engine control apparatus (10) according to claim 1, further comprising:
instruction means (58) for indicating that the driver is ready to start the vehicle;
wherein the ready-to-start determining means (74) determines, even if the first predetermined time has not elapsed after the engine (12) has restarted, that the driver is ready to start the vehicle if the instruction means (58) indicates that the driver is ready to start the vehicle.

7. The engine control apparatus (10) according to claim 6, wherein the instruction means (58) comprises a switch (310) for indicating that the driver is ready to start the vehicle.

8. The engine control apparatus (10) according to claim 6, wherein the instruction means (58) for indicating that the driver is ready to start the vehicle comprises a sensor (270) for detecting that a gear change is made after the engine (12) has started.

## Patentansprüche

1. Motorsteuerungsvorrichtung (10) zur Hemmung der Antriebsleistung eines Motors (12) in einem Fahrzeug basierend auf der Anweisung eines Fahrers, ein Drosselventil zu öffnen, wenn das Fahrzeug anfährt, nachdem der Motor (12) aus einem Stop-/Leerlaufzustand wieder angelassen worden ist, aufweisend:
ein Getriebe (36) mit einer Vielzahl von Gängen mit verschiedenen Übersetzungsverhältnissen, zum Übertragen der Antriebsleistung des Motors (12) auf ein Antriebsrad (WR) des Fahrzeugs basierend auf einem der aktuell ausgewählten Gänge;
eine Startbereitschaftsermittlungsvorrichtung (74) zum Ermitteln, ob der Fahrer zum Anfahren des Fahrzeugs bereit ist oder nicht;
und
ein Antriebssteuerungsmittel (70) zur Hemmung der Antriebsleistung des Motors (12) basierend auf der Anweisung des Fahrers, ein Drosselventil zu öffnen, wenn das Fahrzeug anfährt, nachdem der Motor (12) aus einem Stop-/Leerlaufzustand wieder angelassen worden ist, und zum Aufheben der Hemmung der Antriebsleistung des Motors (12), wenn die Startbereitschaftsermittlungsvorrichtung (74) ermittelt, dass der Fahrer zum Anfahren des Fahrzeugs bereit ist,
und
wobei die Startbereitschaftsermittlungsvorrichtung (74) ermittelt, dass der Fahrer zum Anfahren des Fahrzeugs bereit ist, wenn eine erste vorbestimmte Zeitspanne verstrichen ist, während derer das Fahrzeug nicht angefahren ist, nachdem der Motor (12) wieder angelassen worden ist, in einem Zustand, in dem kein Gang des Getriebes (36) ausgewählt ist.

2. Motorsteuerungsvorrichtung (10) nach Anspruch 1,
wobei die Motorsteuerungsvorrichtung (10) weiter eine Fliehkraftkupplung / Zentrifugalkupplung (34) zur Übertragung der Antriebsleistung des Motors (12) auf das Getriebe (36) aufweist;
wobei die Gänge in zwei Gruppen von Gängen unterteilt sind, umfassend eine Gängegruppe mit größeren Übersetzungsverhältnissen und eine Gängegruppe mit kleineren Übersetzungsverhältnissen; und
wobei die Startbereitschaftsermittlungsvorrichtung (74) ermittelt, dass der Fahrer zum Anfahren des Fahrzeugs bereit ist, wenn eine erste vorbestimmte Zeitspanne verstrichen ist, während derer das Fahrzeug nicht angefahren ist, nachdem der Motor (12) wieder angelassen worden ist, in einem Fall, in dem kein Gang des Getriebes (36) ausgewählt ist, oder in einem Fall, in dem einer der Gänge in der Gängegruppe mit kleineren Übersetzungsverhältnissen ausgewählt ist.

3. Motorsteuerungsvorrichtung (10) nach Anspruch 2, wobei die Startbereitschaftsermittlungsvorrichtung (74) ermittelt, dass der Fahrer zum Anfahren des Fahrzeugs bereit ist, wenn eine zweite vorbestimmte Zeitspanne verstrichen ist, bevor die Drehzahl des Motors (12) nach dem Wiederanlassen des Motors (12) eine Betriebsdrehzahl der Fliehkraftkupplung/Zentrifugalkupplung (34) erreicht, in einem Fall, in dem einer der Gänge in der Gängegruppe mit größeren Übersetzungsverhältnissen ausgewählt ist; und
die erste vorbestimmte Zeitspanne und die zweite vorbestimmte Zeitspanne wie folgt zueinander in Beziehung stehen:
die erste vorbestimmte Zeitspanne < die zweite vorbestimmte Zeitspanne.

4. Motorsteuerungsvorrichtung (10) nach Anspruch 3, wobei ermittelt wird, dass der Fahrer zum Anfahren des Fahrzeugs bereit ist, wenn eine dritte vorbestimmte Zeitspanne verstrichen ist, nachdem der Motor (12) wieder angelassen ist, während das Fahrzeug nicht angefahren ist, sogar wenn die Drehzahl des Motors (12) die Betriebsdrehzahl der Fliehkraftkupplung / Zentrifugalkupplung (34) ohne das Verstreichen der zweiten vorbestimmten Zeitspanne erreicht, nachdem der Motor (12) wieder angelassen worden ist; und
die erste vorbestimmte Zeitspanne, die zweite vorbestimmte Zeitspanne und die dritte vorbestimmte Zeitspanne wie folgt zueinander in Beziehung stehen:
die erste vorbestimmte Zeitspanne < die zweite vorbestimmte Zeitspanne < die dritte vorbestimmte Zeitspanne.

5. Motorsteuerungsvorrichtung (10) nach Anspruch 3, wobei der Motor (12) gesteuert wird, um den Leerlaufzustand nach Ablauf einer vierten vorbestimmten Zeitspanne wieder zu beenden, während derer sich der Motor (12) nach dem Wiederanlassen des Motors (12) im Leerlauf befindet; und
die erste vorbestimmte Zeitspanne, die zweite vorbestimmte Zeitspanne und die vierte vorbestimmte Zeitspanne wie folgt zueinander in Beziehung stehen:
die erste vorbestimmte Zeitspanne < die zweite vorbestimmte Zeitspanne < die vierte vorbestimmte Zeitspanne.

6. Motorsteuerungsvorrichtung (10) nach Anspruch 1, weiter aufweisend:
Instruktionsmittel (58) zum Anzeigen, dass der Fahrer zum Anfahren des Fahrzeugs bereit ist;
wobei die Startbereitschaftsermittlungsvorrichtung (74) sogar dann, wenn die erste vorbestimmte Zeitspanne nach dem Wiederanlassen des Motors (12) nicht verstrichen ist, ermittelt, dass der Fahrer zum Anfahren des Fahrzeugs bereit ist, wenn das Instruktionsmittel (58) anzeigt, dass der Fahrer zum Anfahren des Fahrzeugs bereit ist.

7. Motorsteuerungsvorrichtung (10) nach Anspruch 6, wobei das Instruktionsmittel (58) einen Schalter (310) zum Anzeigen, dass der Fahrer zum Anfahren des Fahrzeugs bereit ist, aufweist.

8. Motorsteuerungsvorrichtung (10) nach Anspruch 6, wobei das Instruktionsmittel (58) zum Anzeigen, dass der Fahrer zum Anfahren des Fahrzeugs bereit ist, einen Sensor (270) zum Erkennen eines nach dem Anlassen des Motors (12) erfolgten Gangwechsels aufweist.

## Revendications

1. Appareil de commande de moteur (10) pour supprimer de la puissance d'entraînement d'un moteur (12) dans un véhicule, sur la base d'une instruction d'ouvrir une valve papillon des gaz lorsque le véhicule est démarré après le redémarrage du moteur (12) à partir d'un état stop-ralenti, comprenant
une transmission (36) ayant une pluralité de positions de rapport avec des rapports de réduction différents pour transmettre de la puissance d'entraînement du moteur (12) à une roue d'entraînement (WR) du véhicule sur la base d'une des positions de rapport actuellement sélectionnée,
des moyens de détermination de prêt à démarrer (74) pour déterminer si le conducteur est prêt ou non à démarrer le véhicule,
et
des moyens de commande de sortie de puissance de propulsion (70) pour supprimer de la puissance d'entraînement du moteur (12), sur la base d'une instruction d'ouvrir une valve papillon des gaz lorsque le véhicule est démarré après le redémarrage du moteur (12), et pour arrêter la suppression de la puissance d'entraînement du moteur (12), si les moyens de détermination de prêt à démarrer (74) déterminent que le conducteur est prêt à démarrer le véhicule,
et
**caractérisé en ce que** les moyens de détermination de prêt à démarrer (74) déterminent que le conducteur est prêt à démarrer le véhicule, si un premier laps de temps prédéterminé a écoulé pendant lequel le véhicule n'a pas été démarré après le redémarrage du moteur (12), dans un état dans lequel les positions de rapport de la transmission (36) ne sont pas sélectionnés.

2. Appareil de commande de moteur (10) selon la revendication 1, **caractérisé en ce que** l'appareil de commande de moteur (10) comprend en outre un embrayage centrifuge (34) pour transmettre de la puissance d'entraînement du moteur (12) à la transmission (36), **en ce que** les positions de rapport sont divisées en deux groupes de positions de rapport comprenant un groupe de positions de rapport présentant des rapports de réduction de vitesse plus grands et un groupe de positions de rapport présentant des rapports de réduction de vitesse plus petits, et
**en ce que** les moyens de détermination de prêt à démarrer (74) déterminent que le conducteur est prêt à démarrer le véhicule, si un premier laps de temps prédéterminé a écoulé pendant lequel le véhicule n'a pas été démarré après le redémarrage du moteur (12), dans un cas où les positions de rapport de la transmission (36) ne sont pas sélectionnés ou dans un cas où une des positions de rapport du groupe présentant des rapports de réduction de vitesse plus petits est sélectionnée.

3. Appareil de commande de moteur (10) selon la revendication 2, **caractérisé en ce que** les moyens de détermination de prêt à démarrer (74) déterminent que le conducteur est prêt à démarrer le véhicule, si un deuxième laps de temps prédéterminé a écoulé avant que la vitesse de rotation du moteur (12) n'atteigne une vitesse de rotation d'engagement de l'embrayage centrifuge (34) après le redémarrage du moteur (12), dans un cas où une des positions de rapport du groupe présentant des rapports de réduction de vitesse plus grands est sélectionnée, et
le premier laps de temps prédéterminé et le deuxième laps de temps prédéterminé présentent le rapport réciproque suivant :
le premier laps de temps prédéterminé < le deuxième laps de temps prédéterminé.

4. Appareil de commande de moteur (10) selon la revendication 3, **caractérisé en ce qu'**il est déterminé que le conducteur est prêt à démarrer le véhicule, si un troisième laps de temps prédéterminé a écoulé après le redémarrage du moteur (12), sans que le véhicule ait été démarré, même lorsque la vitesse de rotation du moteur (12) atteint la vitesse de rotation d'engagement de l'embrayage centrifuge (34) sans que le deuxième laps de temps prédéterminé ait écoulé après le redémarrage du moteur (12) et
le premier laps de temps prédéterminé, le deuxième laps de temps prédéterminé et le troisième laps de temps prédéterminé présentent le rapport suivant des uns par rapport aux autres:
le premier laps de temps prédéterminé < le deuxième laps de temps prédéterminé < le troisième laps de temps prédéterminé.

5. Appareil de commande de moteur (10) selon la revendication 3, **caractérisé en ce que** le moteur (12) est commandé à retourner à l'état stop-ralenti après qu'un quatrième laps de temps prédéterminé a écoulé alors que le moteur (12) est au ralenti après le redémarrage du moteur (12) et
le premier laps de temps prédéterminé, le deuxième laps de temps prédéterminé et le quatrième laps de temps prédéterminé présentent le rapport suivant des uns par rapport aux autres:
le premier laps de temps prédéterminé < le deuxième laps de temps prédéterminé < le quatrième laps de temps prédéterminé.

6. Appareil de commande de moteur (10) selon la revendication 1, comprenant en outre
des moyens d'instruction (58) pour indiquer que le conducteur est prêt à démarrer le véhicule,
**caractérisé en ce que** les moyens de détermination de prêt à démarrer (74) déterminent, même si le premier laps de temps prédéterminé n'a pas écoulé après le redémarrage du moteur (12), que le conducteur est prêt à démarrer le véhicule, si les moyens d'instruction (58) indiquent que le conducteur est prêt à démarrer le véhicule.

7. Appareil de commande de moteur (10) selon la revendication 6, **caractérisé en ce que** les moyens d'instruction (58) comprennent un interrupteur (310) pour indiquer que le conducteur est prêt à démarrer le véhicule.

8. Appareil de commande de moteur (10) selon la revendication 6, **caractérisé en ce que** les moyens d'instruction (58) pour indiquer que le conducteur est prêt à démarrer le véhicule, comprennent un capteur (270) pour indiquer qu'un changement de rapport de réduction a été effectué après le démarrage du moteur (12).
